# EUROPEAN PATENT APPLICATION

(11) **EP 1 487 092 A1**
(43) Date of publication of application: **15.12.2004**
(21) Application number: 03291413.7
(22) Date of filing: 13.06.2003
(51) Int. Cl.: H02M 1/12, H01F 3/10

(54) **Power switching system**

(71) Applicant: ALCATEL, 75008 Paris (FR)
(72) Inventor: Baruque Lopez, Raul, 28003 Madrid (ES); De La Pena Llerandi, Jaime, 28009 Madrid (ES)
(74) Representative: Lamoureux, Bernard

(57) **Abstract**

A power switching system is coupled to a first voltage source and a second voltage source of different voltage through a first, second and third terminals sets, a common mode choke coil includes a core, a first, second and third coils such that each coil is connected in series to a terminal, respectively. The core includes at least a first core and a second core such that each coil is wound around to the both cores for attenuating the common mode noise in predetermined frequency bands, respectively.

## Description

### OBJECT OF THE INVENTION

The present invention relates to a power switching system. More particularly, the present invention is directed to a DC/DC power supply apparatus having a common mode choke coil is suitable for blocking a common mode noise current that flows in one of a first terminal and a second terminal and passes through the other terminal over a wide frequency band.

### STATE OF THE ART

At the present time there is a substantial increase in the consumption of electric energy by motor vehicles, due to being equipped with a greater number of electronic devices. Inasmuch as the traditional 12V battery is on occasion insufficient for supplying the electric energy required, motor vehicles such as some automobiles are being equipped with an auxiliary higher tension battery (36V nominal) with greater capacity. In this way two distribution voltages or "buses" are available for feeding the electronic loads or equipment.

Both batteries are coupled through a switching converter system, can be bi-directional, which regulates the interchange of energy between both "buses", such that both batteries are capable of supplying the electric energy demanded by the different electric equipment during normal running of the vehicle. Nevertheless, depending on the electric architecture selected, in some cases operation of the converter is only suitable in uni-directional mode, in buck or in boost mode.

Electronic equipment is sensitive to phenomena such as conducted electromagnetic noise or the like which can provoke malfunction. The common mode noise is transmitted through the cables forming the electric circuit of the vehicle. Said circuit joins each electronic equipment part to the electric energy sources, such as the batteries.

One of the functions performed by the switching system is to filter and/or attenuate the common mode noise generated by the system itself. Consequently, the switching system includes a pair of filters charged with filtering said conducted noise, both in differential mode and in common mode. In this way the mutual interferences between subsystems is avoided and the suitable EMC standards complied with.

Generally these EMC filters are placed solely in the input or in the outlet of the switching converters. Independently, whether the converter is bi-directional or uni-directional, two filters are utilized, such that one of them is located in an input terminal and the other one in an output terminal of the switching system.

Accordingly, each filter in common mode comprises an inductance connected in series in each terminal and at least one capacitor connected in parallel between the terminal to filtering and the vehicle chassis. Several kinds of L-C combinations exist referred to as filters in π, in T or others, known in the state of the art.

In some switching converters used in automotion no electric insulation is required between the input and the output. Consequently, it is possible to join two of the four terminals of the converter electrically, whereupon the switching converter becomes a tripole instead of a quadripole as has been described previously. This common or "mass" terminal is usually connected to the vehicle chassis itself.

The presence of said coils in series causes the filters to be bulky and costly and, consequently, the switching system is bulky and costly. Moreover, resistance losses are produced in the coil conductors, being especially critical when strong currents circulate, for example, 100A. In these cases the section of the conductors and the number of turns of the coils affect the size and functions of the magnetic components. Hence, the global costs of the vehicle, as well as the dimensions of the same, are penalized.

Accordingly, it becomes necessary to develop a power switching converter that includes a common mode choke coil for filtering the common mode noise contained in the input and output voltages of the power switching system, such that the common mode choke will filter the common mode noise corresponding to a broad band of frequencies and will have lower losses and reduced size and cost.

### CHARACTERISATION OF THE INVENTION

In accordance with the present invention, a power switching system is coupled to a first energy source and a second energy source of different voltage through a first, second and third terminals sets, a common mode choke coil includes a core, a first, second and third coils such that each coil is connected in series to a terminal, respectively. The core includes at least a first core and a second core such that each coil is wound around to the both cores for attenuating the common mode noise in predetermined frequency bands, respectively.

An object of the present invention is provided a common mode choke coil for attenuating the common mode noise from the input and output voltages in a wide frequency band.

Another object of the present invention is to provide one common mode choke coil of a significantly smaller size than usual

A still further object of the present invention is to provide a bi-directional switching system capable of connectable with loads having highly noise-sensitive characteristics.

Another object of the present invention is to provide a power switching system able to attenuate EMC noise with a size reduction when compared with state of the art solutions.

A still further object of the invention is to provide a EMC filter with reduced conduction losses in the windings.

### BRIEF DESCRIPTION OF THE DRAWINGS

The characteristics and advantages of the invention will become more clear with a detailed description thereof, taken together with the attached drawings, in which:
- Figure 1 shows in a block diagram a power switching system according to the invention,
- Figure 2 shows a common mode choke coil according to the invention, and
- Figure 3 shows other common mode choke coil according to the invention.

### DESCRIPTION OF THE INVENTION

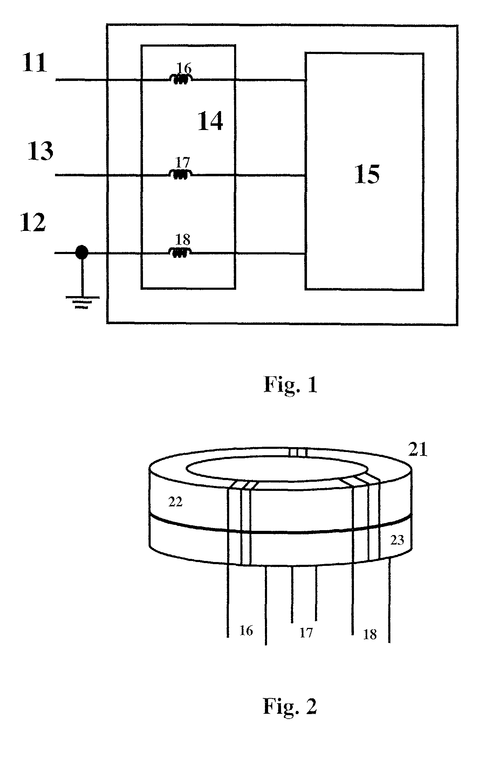

Figure 1 shows in a block diagram a power switching system including terminals 11, 12, 13 connected to a power conversion 15 means through a common mode choke coil 14. The choke coil 14 includes three coils 16, 17, 18 such that each coil is connected in series in each terminal 11, 12, 13 respectively.

Several loads are coupled to the terminals 11, 12, 13 (not shown). There are two energy sources parallel-coupled to the terminals 11, 12, 13 too (not shown). For instance, each energy source is a battery. Thus, the common mode choke coil 14 is able of considerably removing the noises in common mode from the input and output voltages.

Both energy sources have different voltage such that one voltage is greater than the other voltage. Accordingly, the conversion 15 means is a power switching supply performing in a Buck mode, a Boost mode, or the like. In the state of the art performing of the BUCK or BOOST switching converter 15 is known, and is therefore not described. However, other known conversion topologies can be used such as Cuk, Sepic, or like.

Thus, if the output voltage of the conversion 15 means is higher than the input voltage, the conversion 15 means will perform as a boost converter, and vice versa, if the output voltage of the conversion 15 means is lower than the input voltage, the conversion 15 means will perform as a buck converter.

It should be observed that the conversion 15 means might include a transformer for providing a predetermined transformer ratio. Likewise, the terminal 12 is connected to ground or chassis of a vehicle.

The coils 16, 17, 18 are magnetically coupled each other via a magnetic core 21. For instance, the coil 16 is coupled in series to the terminal 11. The coil 17 is coupled in series to the terminal 13, and the coil 18 is coupled in series to the terminal 12.

The core 21 includes several cores with a toroide shape and having each of them high permeability. However, other core shapes can be used such as E-shape, U-shape, I-shape, or like. For example, the impedance in a lower frequency band of a first core 22 is higher than the impedance of a second core 23. Accordingly, the noise in that lower frequency band can sufficiently be attenuated. On the other hand, the impedance in a higher frequency band of a second core 23 is higher than the impedance of the first core 22. Accordingly, the noise in that higher frequency band can sufficiently be attenuated. Obviously, the coils 16, 17, 18 are wound around of the both cores 22, 23, respectively.

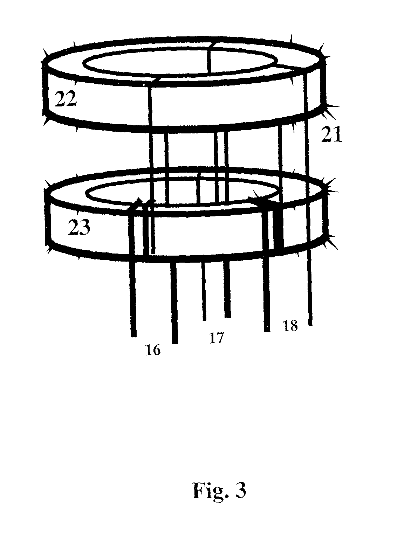

The common mode choke coil 14 is designed to perform filtering of the common mode noise in a broad range of frequencies, either by itself or together with capacitors. The transversal section of each of the conductors forming each of the coils 16, 17, 18 is dimensioned so that the electric current will flow along each conductor, respectively. Similarly, each coil 16, 17, 18 is formed by a winding having a predetermined number of coils or turns, respectively, with the aim to obtain the filtering level intended en each predetermined frequency range, shown in figure3.

Inasmuch as the section of each conductor is selected by the current which will flow along the conductor, the size of the window cores can be reduced and, therefore, the size of the magnetic component itself. This advantage is especially important when strong current flows, for example, currents ≥ 100 A, hence the transversal section of the conductor is large.

It has to be observed that the input current should be equal to the sum of the output current plus the current which circulates along terminal 12. Accordingly, the sum of the ampere turns becomes zero under normal operation of the power switching system. As a result core 21 of the common mode choke coil 14 is not saturated with the magnetic flux.

Similarly, each cores 22, 23 forming the cores 21 is designed for a predetermined range of frequencies, such that said cores 22, 23 do not saturate in their range of work frequencies, under normal conditions. Obviously, both cores have the same shape, for example, core 21 has a toroide shape. It should be observed that other core shapes may be used such as E-shape, I-shape, U-shapes, or like.

Turning now to figure 3, in several cases is possible to arrange the windings 16, 17 and 18 so that the turns wound on core 23 is different to the number of turns wound on core 22.

The foregoing description has been made for a bi-directional switching converter, i.e., capable of transferring energy in both directions. Nonetheless, the invention is equally applicable to switching converters only works as uni-directional, for instance, functioning in buck mode, in boost mode, flyback, forward, or like.

With the aim of achieving an improvement in some electric functions, such a performance/efficiency ripple of the output voltage, dissipation, etc., on numerous occasions multi-phase switching topologies are resorted to. In these several cells with elemental power are placed, such as the one described above, with the commutations conveniently phased in time, such that an improvement is achieved in the mentioned parameters.

## Claims

1. Power switching system is coupled to a first energy source and a second energy source of different voltage through a first, second and third terminals sets (11, 12, 13), a common mode choke coil (14) includes a core (21), a first, second and third coils (16, 17, 18), each coil is connected in series in a terminal (11, 12, 13), respectively, the second terminal (12) is connectable to a ground; **characterised in that** the core (21) includes at least a first core (22) and a second core (23) such that each coil (16, 17, 18) is wound around to the both cores (22, 23) for attenuating the common mode noise from the input and output voltages in predetermined frequency bands, respectively.

2. Power system according to claim 1; being each predetermined frequency band different each other with a certain overlapped band.

3. Power system according to claim 2; wherein the wires for making each coil (16, 17, 18) are of different cross-section such that each cross-section is adapted to the current flowing through the coil (16, 17, 18), respectively.

4. Power system according to claim 1; being each voltage source a power converter, a battery, a supercapacitor, a fuel cell or flywheel, or a combination of at least two of them.

5. Power system according any preceding claims, the power switching system includes a switching power supply (15).

6. Power system according to claim 5; being the switching power supply (15) a DC/DC switching power supply.

7. Power system according to claim 6; wherein the switching power supply (15) operating as a BUCK converter.

8. Power system according to claim 6; wherein the switching power supply (15) operating as a BOOST converter.

9. Power system according to claim 6; wherein the switching power supply is able to operate as a BUCK or a BOOST converter.

10. Power system according any claims 5 to 9, including the switching power supply (15) a magnetic coupling device such as transformer with a predetermined transformer ratio.

11. Power system according to any claims 1 to 3; wherein the winding of each coil (16, 17, 18) has at least one turn.

12. Power system according to any preceding claims 1 to 10, being each core (22, 23) at least a toroide core, an E-shape, an I-shape or U-shape core.

13. Power system according to any preceding claims 1 to 11, having the windings (16, 17, 18) a different number of turns in core (22) that in core (23).
